# EUROPEAN PATENT SPECIFICATION

(11) **EP 3 465 311 B1**
(45) Date of publication and mention of the grant of the patent: **28.06.2023**
(21) Application number: 17739363.4
(22) Date of filing: 06.06.2017
(51) Int. Cl.: G02B 6/44, H04Q 1/06

(54) **TELECOMMUNICATIONS CLOSURE WITH POINT OF CONNECTION PLATE HOLDERS**
TELEKOMMUNIKATIONSGEHÄUSE MIT VERBINDUNGSPUNKTPLATTENHALTERN
ENCEINTE DE TÉLÉCOMMUNICATIONS AVEC SUPPORTS DE PLAQUE DE POINTS DE CONNEXION

(30) Priority: 06.06.2016 US 201662346108 P
(43) Date of publication of application: 10.04.2019
(73) Proprietor: Corning Optical Communications LLC, Hickory, NC 28601 (US)
(72) Inventor: DURAN, Christian Shane, Fort Worth, Texas 76131 (US); KEENUM, John Austin, Haltom City, Texas 76137 (US); REED, Edward Joseph, North Richland Hills, Texas 76180 (US); TENHOLDER, Rodger Alan, Saginaw, Texas 76179 (US)
(74) Representative: Elkington and Fife LLP
(86) International application number: PCT/US2017/036144
(87) International publication number: WO 2017/214139

(56) References cited:
- EP-A2- 1 166 161
- US-A- 3 801 873
- US-A1- 2011 211 799
- US-A1- 2012 219 263
- US-A1- 2015 355 428

## Description

### BACKGROUND

### Field of the Invention

The present invention relates generally to telecommunications cabinets that offer Point of Connection, PoC, functionality and more particularly to telecommunications cabinets that include modular panels that allow for customization of the PoC functionality in a particular telecommunications cabinet.

### Technical Background

Telecommunications networks connect subscribers of telecommunications services to telecommunications service providers. In a telecommunications network, cabinets, closures, or other access points in the network provide access for technicians and segment the network to allow the technician to test portions of the network or make changes to portions of the network. Telecommunications cabinets may also include components that split a signal or convert the signal from one signal type to another. Such components are often referred to as Point of Connection components, or PoC components. In a fiber optic network, electrical network, or a combined fiber and electrical network, a PoC cabinet may split a signal and convert the signal from an optical signal to an electrical signal, from an electrical signal to an optical signal, from an optical signal to another optical signal, or from an electrical signal to another electrical signal. For example, a PoC cabinet may convert an optical signal from a provider into one or more electrical signals to be delivered to subscribers. It would be beneficial to have a PoC cabinet that is easily updated to provide for low initial installation costs and flexibility to upgrade the network as needed. US 2011/0211799 discloses an optical terminal comprising a feeder cassette, distribution cassette and splitter module. US 2012/0219263 discloses an optical-fiber based distributed antenna system.

### SUMMARY

Embodiments disclosed herein provide for a telecommunications closure that functions as a point of connection cabinet, or PoC cabinet. Accordingly to an aspect of the invention, there is provided a closure according to claim 1. The panel holders are each configured to receive a panel that includes at least one PoC component, such as an optical to electrical conversion component, an electrical to optical conversion component, an optical to optical conversion component, or an electrical to electrical conversion component. In some embodiments, the panel may also include a pass-through component. The panels may also include cable storage components to accommodate portions of the feeder and distribution cables that are coupled to a particular panel. The closure need not be fully loaded with the maximum number of panels upon installation but can be customized to include the required number of panels for a given network. The closure is capable of being updated by adding, removing, or changing the number and type of panels included in the panel holders.

In a first example12, the panels are slideably received in the panel holders and are removable from the panel holders. As such, a user can easily add, change, or replace panels in the closure to change the functionality of the closure and access each panel for any necessary maintenance of the panels.

In another example embodiment, each panel holder includes a hinge and the panels are hingedly connected to the panel holders. As such, the panels are hingedly movable between an installed position and an uninstall position by pivoting the panels on their respective hinges. In some embodiments, the panel holders include a locking mechanism to releasably lock the panel in the installed position. The locking feature may include a flexible finger having a protruding tab that locks into an opening in the panel when the panel is in the installed position.

The present disclosure also includes a method for forming a telecommunications closure. According to an aspect of the invention, there is provided a method according to claim 13.

Additional features and advantages will be set forth in the detailed description which follows, and in part will be readily apparent to those skilled in the art. It is to be understood that the foregoing general description, the following detailed description, and the accompanying drawings are merely exemplary and intended to provide an overview or framework to understand the nature and character of the claims.

### BRIEF DESCRIPTION OF THE FIGURES

**FIG. 1** is a front, perspective view of an embodiment of a telecommunications closure in accordance with this disclosure.
**FIG. 2** is another front, perspective view of the telecommunications closure of FIG. 1.
**FIG. 3** is a front, perspective view of another example of a telecommunications closure in accordance with this disclosure.
**FIG. 4** is a side, perspective view of an embodiment of a panel in accordance with this disclosure.
**FIG. 5** is a front, perspective view of another embodiment of a telecommunications closure in accordance with this disclosure.
**FIG. 6** is a front, perspective view of the telecommunications closure of FIG. 5 with the panel in the uninstalled position.
**FIG. 7** is a schematic view of a method of forming a telecommunications closure in accordance with this disclosure.

### DETAILED DESCRIPTION

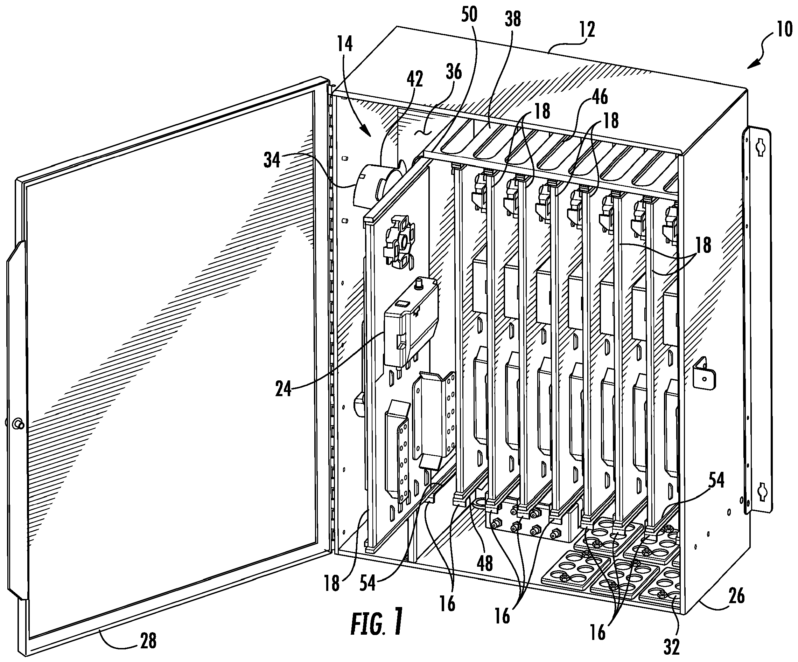

Reference will now be made in detail to the embodiments, examples of which are illustrated in the accompanying drawings. Whenever possible, like reference numbers will be used to refer to like components or parts. One embodiment of a telecommunications closure 10 is illustrated in FIG. 1. The telecommunications closure 10 includes a body or enclosure 12 that defines an interior space 14 having a plurality of panel holders 16 therein. The panel holders 16 are spaced within the interior space 14 to allow for Point of Connection panels 18, or PoC panels 18, to be positioned within the interior space 14. Due to the spacing of the panel holders 16 in the interior space 14, the installed PoC panels 18 are easily accessible to allow a user to perform maintenance on a panel 18 or to add, remove or change panels 18 depending on the needs of the network. Each panel 18 includes at least one point of connection component 24, or PoC component 24. As used here, the term "point of connection component" or "PoC component" means any feature that splits a signal or converts a signal from one signal type to another. For example, a PoC component may perform an electrical-optical conversion of a signal, an optical-electrical conversion of a signal, optical-optical conversion of a signal, or an electrical-electrical conversion of a signal. In some embodiments, the panel may also include a pass-through component. As used herein, the term "pass-through component" means any feature that passes through a substantially unmodified signal without splitting the signal or converting the signal from one signal type to another.

The telecommunications closure 10 may include different types of panels 18 to accommodate the needs of a particular network. In addition, the telecommunications closure 10 need not be fully-loaded and may include only those panels 18 that are needed for a particular network application. As such, the telecommunications closure 10 is easily modified and adapted to the needs of the relevant network.

Referring again to FIG. 1, the body or enclosure 12 may be any suitable shape and size. In the embodiment illustrated in FIG. 1, for example, the enclosure 12 is a generally elongated, rectangular shape. The enclosure 12 may be configured for mounting on any suitable surface or location, such as, for example, a floor, a wall, a conduit, a pole, a pedestal, a rack, in a "dog-house," or underground to provide compatibility with service providers, including cable service providers, mounting preferences.

In addition, the enclosure 12 may be any suitable size. For example, in some embodiments, the enclosure 12 has a small form factor, having an overall length of about 24 inches, an overall width of about 18 inches, and an overall depth of about 8 inches, although other sizes and shapes are within the scope of this disclosure.

In the embodiment illustrated in FIG. 1, the enclosure 12 includes a base 26 and a cover 28 hingedly affixed to the base 26. The base 26 and cover 28 serve to close off and protect the internal components of the telecommunications closure 10 when the telecommunications closure 10 is closed. In some embodiments, the base 26 and cover 28 include a gasket to seal the base 26 to the cover 28 and allow for outdoor placement of the telecommunications closure 10. The base 26 and cover 28 may also include security features such as a security screw or external lock. The base 26 and cover 28 may be made of any suitable material, such as a rigid metal or plastic material.

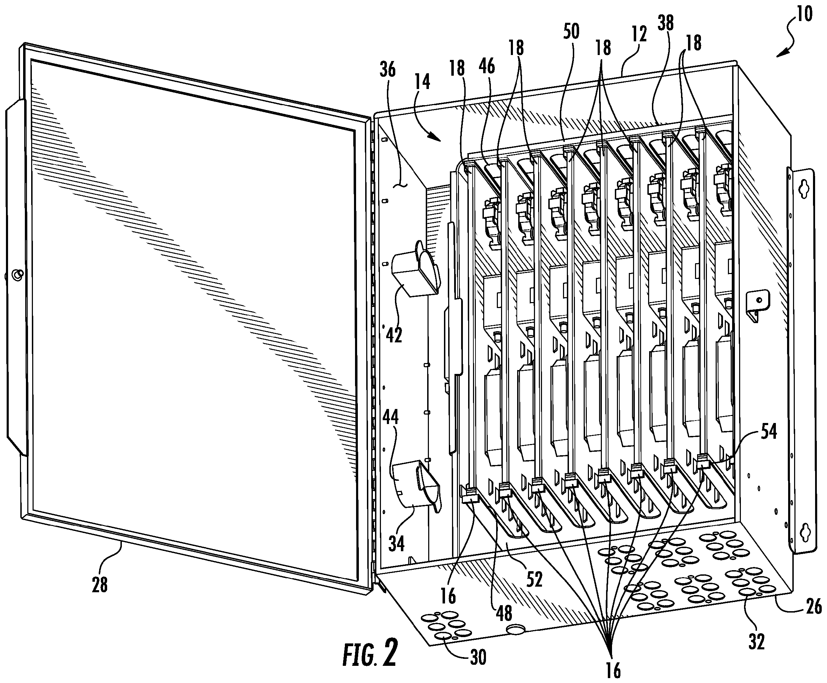

The enclosure 12 may include one or more ports for receiving feeder cables and distribution cables. In the embodiment illustrated in FIGS. 1 and 2, the enclosure 12 includes six feeder ports 30 and thirty-six distribution ports 32. While the enclosure 12 of FIGS. 1 and 2 includes six feeder ports 30 and thirty-six distribution ports 32, in other embodiments the telecommunications closure 10 may have any number of ports, including, for example, a single port that accommodates both feeder and distribution cables. The terms "feeder cable" and "distribution cable" include all types of electrical and optical cables and should be understood to include, without limitation, transport cables, back haul cables, branch cables, drop cables, and the like.

The feeder and distribution ports 30, 32 may be initially closed and can be opened by punching out material in the port, otherwise known as a "punch-out" port. In other embodiments, the feeder and distribution ports 30, 32 may include grommets for sealing to the feeder and distribution cables in place of, or in addition to, the "punch-out" material.

In some embodiments, the telecommunications closure 10 may be preconfigured with one or more feeder cables, one or more distribution cables or both feeder and distribution cables. For example, one or more 12F hardened multifiber harnesses including LC or SC single fiber connector may be pre-installed in one or more of the feeder ports. The 12F Hardened connector may be positioned outside the enclosure 12 while the single fiber connectors are housed within the enclosure 12.

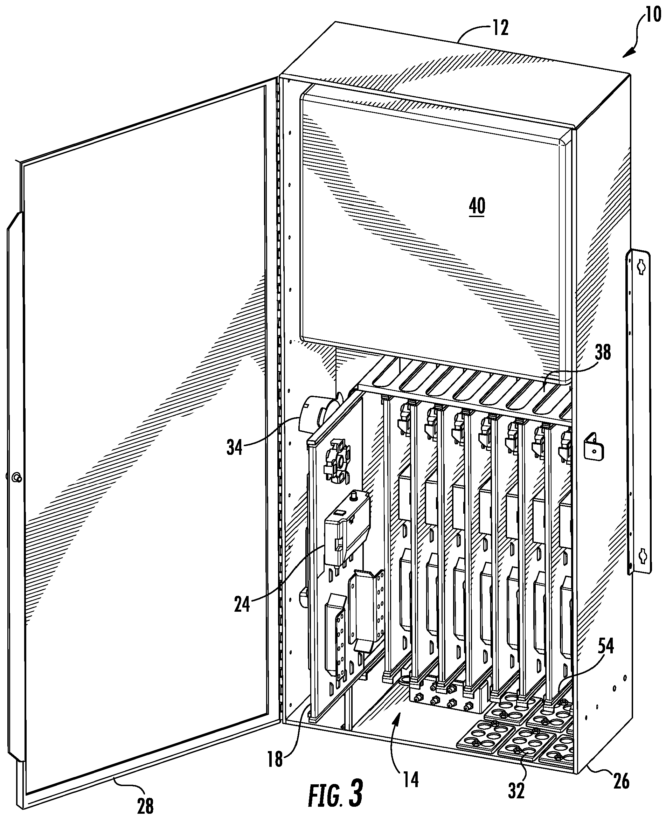

As best shown in FIG. 2, the enclosure includes an interior space 14 that includes several components. In one embodiment, the interior space 14 includes a feeder cable reel 34 positioned on an interior wall 36 of the interior space 14 and a frame 38 that includes one or more plate holders 16. In other embodiments, for example in FIG. 3, the interior space 14 also includes other components such as an inverted node 40. The interior space 14 may include any other component to accommodate the needs of a particular network.

The feeder cable reel 34 is a dedicated fiber management feature that manages the routing of cables that enter the enclosure 12 through the feeder cable port 30. The feeder cable reel 34 accommodates slack in the feeder cables to provide an organized installation. This allows the field technician to effectively and easily accommodate varying lengths of the cables.

The feeder cable reel 34 may include a first protrusion 42 and a second protrusion 44 spaced from the first protrusion 42. The first and second protrusions 42, 44 may each include flanges to hold the feeder cable on the feeder cable reel 34. It will be understood by those of skill in the art that the feeder cable reel 34 is not limited to the specific embodiment illustrated in FIGS. 1 and 2 but may be any suitable cable management feature. In addition, it will be understood that the feeder cable reel 34 may also include strain relief features for the feeder cables.

The frame 38 is coupled to an interior surface 36 of the interior space 14 and may include input openings 46, exit openings 48 and plate holders 16. In the embodiment illustrated in FIGS. 1 and 2, the input openings 46 are oval openings that are positioned in an upper wall 50 of the frame 38 while the exit openings 48 are slots formed in a lower wall 52 (FIG. 2) of the frame 38. However, in other embodiments the input openings 46 may be any feature that allows for passage of input cables to the panels 18 while the exit openings 48 may be any opening that allows for passage of output cables from the panels 18 to the distribution ports 32.

The frame 38 also includes a plurality of panel holders 16 configured to hold modular panels 18. The panel holders 16 allow for configuring and re-configuring the telecommunications closure 10 by inserting, removing and/or replacing one or more of the panels 18. Such configuring and re-configuring may also include connecting feeder and distribution cables to one or more panels 18. A field technician may easily access the panels 18 as may be necessary for such configuring and/or re-configuring.

In the embodiment illustrated in FIGS. 1 and 2, the panel holders 16 include rail guides 54 to accept and removably retain the panels 18. The rail guides 54 are positioned within the frame 38 so that when panels 18 positioned in the rail guides 54 the panels 18 are in an adjacent alignment. To provide for routing efficiency and ease of use, rows of rail guides 54 may be position adjacent to one another so that the panels 18 are vertically aligned when installed adjacent to each other. Each of the panels 18 may be separately and independently inserted, removed and repositioned in the rail guides 54 making the telecommunications closure 10 modular and variably configurable.

The telecommunications closure 10 may include any number of panel holders 16, and specific embodiments may include, for example, 3, 6, 9, or 12 panel holders 18. For the removal of doubt, each panel holders 16 need not include a panel at all times. Thus, the number of panels 18 positioned inside the enclosure may be less than the total number of panel holders 16. In this way, the telecommunications closure 10 may be configured to have a cost compatible with the corresponding telecommunications network.

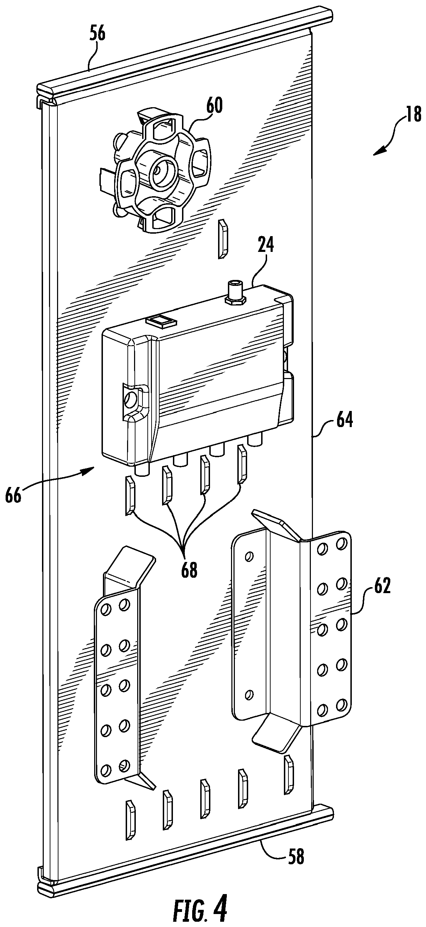

FIG. 4 illustrates an example panel 18 for use in the telecommunications closure 10. The panel 18 is rectangular in shape and includes an upper rail 56, a lower rail 58, a first fiber management feature 60, a second fiber management feature 62, and a PoC component 24 positioned between the first fiber management feature 60 and a second fiber management feature 62. The upper and lower rails 56, 58 are configured to slidably engage the rail guides 54 (FIGS. 1 and 2) of the frame 38 when the panel 18 is inserted into the panel holder 16. As illustrated in FIG. 4, the upper and lower rails 56, 58 extend slightly past an edge 64 of the panel 18 to allow the panel 18 to be pulled away from the telecommunications closure 10.

In some embodiments, the panel 18 has detents (not shown) or other features on or near the upper and lower rails 56, 58 to hold the panel 18 in place when in the installed position and to prevent the panel 18 from inadvertently sliding out of the panel holders 16.

The first and second cable management features 60, 62 are configured to accept and manage feeder and distribution cables, respectively. In some embodiments, the first and second cable management features 60, 62 are cable storage reels. The cable storage reels may include two or more protrusions that include flanges to maintain a cable on the first and second cable management features 60, 62. The PoC component 24 may be positioned between the first and second cable management features 60, 62 to allow for input cables to be fed from the first cable management feature 60 into the PoC component 24 and output cables to be fed from the PoC component 24 to the second cable management feature 62.

Each panel 18 includes a mounting location 66 for a PoC component 24. The mounting location 66 may include mounting features 68 to hold a PoC component 24 to the panel 18. In the embodiment illustrated in FIG. 4, the mounting location 66 is between the first and second cable management features 60, 62. The PoC component 24 may include electrical to optical conversion components, optical to electrical conversion components, optical to optical conversion components, electrical to electrical conversion components, pass-through components, or the like. In some embodiments, the PoC component 24 is one of the following components: (1) an electrical-to-electrical PoC component that connects in-building cables, coax-duct in-building cables, coax-fibre in-building cables to coaxial distribution networks; (2) an electrical-to-optical PoC component that connects coaxial in-building cables, coax-duct in-building cables, or coax-fibre in-building cables to fibre distribution networks; (3) an optical-to-electrical PoC component that connects fibre in-building cables to coaxial distribution networks; or (4) an optical-to-optical PoC component that connects fibre in-building cables to fibre distribution networks. The PoC component 24 is not limited to these specific embodiments and other embodiments are within the scope of this disclosure.

The POC component 24 may accept any suitable connector type. For example, in some embodiments, PoC component 24 includes LC adapters to accept optical fibers having LC connectors thereon. In other embodiments, the PoC component 24 includes SC adapters to accept optical fibers having SC connectors thereon. In yet other embodiments, the PoC component 24 includes a multifiber adapter to accept a multifiber connector.

As discussed above, in some embodiments the panels 18 are removable from the telecommunications closure 10 to allow a technician to configure the panel 18, including wrapping cable around the cable management features 60, 62 and coupling the cables to the PoC component 24, while the panel 18 is removed from the telecommunications closure 10. This greatly simplifies the installation process and provides a much more convenient interface for the technician to work with.

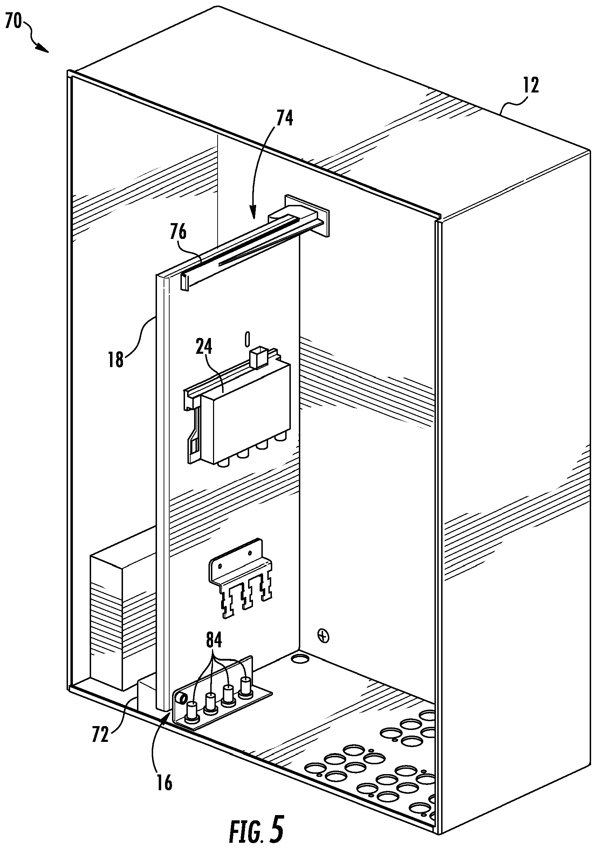

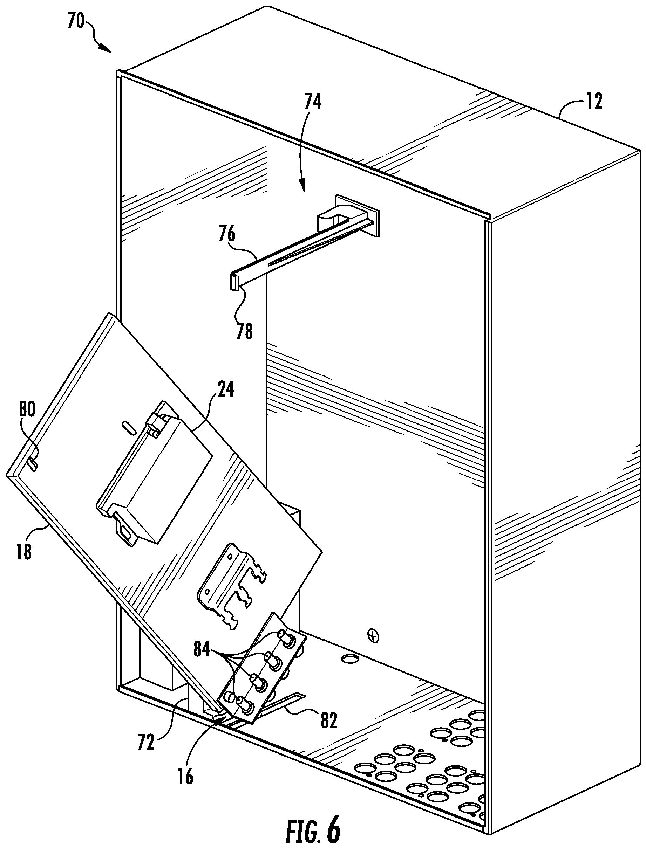

FIGS. 5 and 6 illustrate another embodiment of a telecommunications closure 70 in which the panels 18 are rotatably coupled to the panel holders 16. The panel holders 16 include a hinge 72 that allows the panel 18 to rotate between an installed position (FIG. 5) and an uninstalled position (FIG. 6). The panel 18 is shown in the installed position in FIG. 5. The panel 18 is in the uninstalled position at any location other than the installed position. An example illustration of a panel 18 in the uninstalled position is shown in FIG. 6. While only a single panel 18 and a single panel holder 16 are shown in FIGS. 5 and 6, the telecommunications closure 70 is not limited to only one panel 18 and one panel holder 16 but may include any number of panels 18 and panel holders 16. As discussed above, the telecommunications closure 70 may include fewer panels 18 than the available panel holders 16.

In some embodiments, the panel 18 is removable from the hinge 72 when the panel 18 is in the uninstalled position to allow a technician to couple feeder and distribution cables to the PoC component 24.

In some embodiments, the enclosure 12 comprises a locking feature 74 to removably hold the panel 18 in the installed position. The locking feature 74 may include a flexible finger 76 having a protruding tab 78 (FIG. 6). The panel 18 may include an opening 80 configured to receive the protruding tab 78 when the panel 18 is in the installed position.

In some embodiments, the enclosure 12 includes an opening 82 (FIG. 6) adjacent to each of the panel holders 16 to accommodate connectors 84 associated with the panels 18. For example, in the embodiment illustrated in FIGS. 5 and 6, each panel 18 includes one or more connectors 84 coupled to a lower end of the panel 18. The connectors 18 align with and partially pass through the opening 82 (FIG. 6) when the panel 18 is in the installed position, as illustrated in FIG. 5. This allows a technician to move the panel 18 from the installed position (FIG. 5) to the uninstalled position (see e.g., FIG. 6) without disconnecting distribution cables from the connectors 84. In some embodiments, the technician can also completely remove the panels 18 from the hinge 72 without disconnecting the distribution cables from the connectors 84.

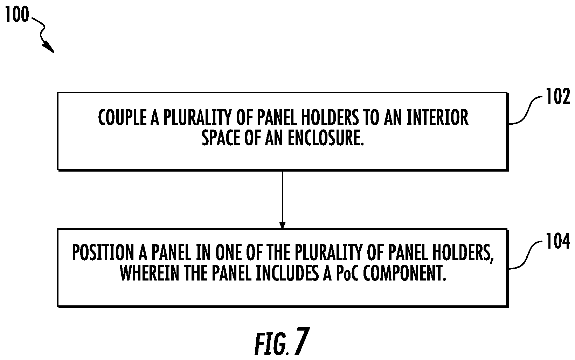

FIG. 7 illustrates a method 100 of forming a fiber optic terminal 10. The method 100 begins and a plurality of panel holders 16 are coupled to an interior space 14 of an enclosure 12, as illustrated at block 102. A panel 18 is then positioned in one of the plurality of panel holders 16, wherein the panel 18 includes a PoC component 24, as illustrated at block 104. In some embodiments, the panel 18 is positioned in one of the plurality of panel holders 16 by pivotally mounting the panel 18 to a panel holder 16. In some embodiments, the panel 18 is removably mounted to one of the panel holders 16.

While the panels 18 have been described herein to include PoC components 24, in some embodiments the panels 18 may include a mounting feature for other components in addition to or in place of the PoC components. For example, the panels 18 may include mounting features to hold an RFoG converter, an optical or coax splitter, an amplifier, an optical connector, a splice tray for fiber splicing, or the like.

It is to be understood that the invention is not to be limited to the specific embodiments disclosed and that modifications and other embodiments are intended to be included within the scope of the appended claims. It is intended that the present invention cover the modifications and variations of this invention provided they come within the scope of the appended claims. Although specific terms are employed herein, they are used in a generic and descriptive sense only and not for purposes of limitation.

## Claims

1. A telecommunications closure (10), comprising:
a body (12) defining an interior space (14);
a plurality of panel holders (16) in the interior space; and
a panel (18) positioned in one of the plurality of panel holders, wherein the panel comprises a point of connection component (24) for splitting or converting a signal;
wherein the panel comprises a first cable storage component (34), wherein the first cable storage component (34) is a cable storage reel and wherein the panel (18) is pivotally mounted to the one of the plurality of panel holders (16).

2. The telecommunications closure (10) of claim 1, wherein the panel (18) comprises a second cable storage component, wherein the point of connection component (24) is positioned between the first cable storage component and the second cable storage component.

3. The telecommunications closure of claim 1, wherein the plurality of panel holders (16) each comprise a first rail guide and a second rail guide (54), wherein the panel comprises a first rail (56) and a second rail (58), wherein the first rail guide is configured to receive the first rail and the second rail guide is configured to receive the second rail, and optionally wherein the first rail (56) is slideable on the first rail guide and the second rail (58) is slideable on the second rail guide so that the panel is movable between an installed position and an uninstalled position.

4. The telecommunications closure (10) of claim 1, wherein the panel (18) is removably positioned in one of the plurality of panel holders (16).

5. The telecommunications closure (10) of claim 1, further comprising a feeder cable reel (34) positioned in the interior space.

6. The telecommunications closure of claim 1, wherein the body further comprises a feeder cable opening and a plurality of distribution cable openings.

7. The telecommunications closure (10) of any preceding claim, wherein the panel holders each comprise a hinge.

8. The telecommunications closure (10) of any preceding claim, wherein the panel (18) is removable from the hinge of the one of the plurality of panel holders (16).

9. The telecommunications closure (10) of claim 8, wherein the body (12) comprises a locking feature to removably hold the panel (18) in the installed position and wherein the locking feature comprises a flexible finger having a protruding tap and the panel comprises an opening configured to receive the protruding tab when the panel is in an installed position.

10. The telecommunications closure of any preceding claim, wherein the body comprises an opening adjacent to each of the plurality of panel holders, wherein the panel comprises a connector, wherein the opening receives the connector when the panel is in an installed position.

11. The telecommunications closure of claim 1, wherein the point of connection component is an electrical-optical signal conversion component.

12. The telecommunications closure of claim 1, wherein the panel also includes a pass-through component.

13. A method of forming a telecommunications closure, comprising:
coupling a frame having a plurality of panel holders (16) to an interior space of an enclosure; and
removably positioning a panel in one of the plurality of panel holders, wherein the panel comprises a point of connection component and a first cable storage component (34);
wherein the first cable storage component is a cable storage reel and the point of connection component is selected from the group comprising an electrical-optical conversion component, an optical-electrical conversion component, an optical-optical conversion component, and an electrical-electrical conversion component, wherein positioning the panel in one of the plurality of panel holders further comprises pivotally mounting the panel to the one of the plurality of panel holders.

## Patentansprüche

1. Telekommunikationskasten (10), umfassend:
einen Körper (12), der einen Innenraum (14) definiert;
eine Vielzahl von Plattenhaltern (16) in dem Innenraum; und
eine Platte (18), die in einem der Vielzahl von Plattenhaltern positioniert ist, wobei die Platte eine Anschlusspunktkomponente (24) zum Aufteilen oder Umwandeln eines Signals umfasst;
wobei die Platte eine erste Kabelspeicherkomponente (34) umfasst, wobei die erste Kabelspeicherkomponente (34) eine Kabelspeichertrommel ist und wobei die Platte (18) schwenkbar an einem der Vielzahl von Plattenhaltern (16) montiert ist.

2. Telekommunikationskasten (10) nach Anspruch 1, wobei die Platte (18) eine zweite Kabelspeicherkomponente umfasst, wobei die Anschlusspunktkomponente (24) zwischen der ersten Kabelspeicherkomponente und der zweiten Kabelspeicherkomponente positioniert ist.

3. Telekommunikationskasten nach Anspruch 1, wobei die Vielzahl von Plattenhaltern (16) jeweils eine erste Schienenführung und eine zweite Schienenführung (54) umfassen, wobei die Platte eine erste Schiene (56) und eine zweite Schiene (58) umfasst, wobei die erste Schienenführung konfiguriert ist, um die erste Schiene aufzunehmen, und die zweite Schienenführung konfiguriert ist, um die zweite Schiene aufzunehmen, und wobei optional die erste Schiene (56) auf der ersten Schienenführung verschiebbar ist und die zweite Schiene (58) auf der zweiten Schienenführung verschiebbar ist, sodass die Platte zwischen einer installierten Position und einer nicht installierten Position beweglich ist.

4. Telekommunikationskasten (10) nach Anspruch 1, wobei die Platte (18) abnehmbar in einem der Vielzahl von Plattenhaltern (16) positioniert ist.

5. Telekommunikationskasten (10) nach Anspruch 1, ferner umfassend eine in dem Innenraum positionierte Kabelzuführungstrommel (34).

6. Telekommunikationskasten nach Anspruch 1, wobei der Körper ferner eine Kabelzuführungsöffnung und eine Vielzahl von Verteilerkabelöffnungen umfasst.

7. Telekommunikationskasten (10) nach einem der vorherigen Ansprüche, wobei die Plattenhalter jeweils ein Scharnier umfassen.

8. Telekommunikationskasten (10) nach einem der vorherigen Ansprüche, wobei die Platte (18) von dem Scharnier des einen der Vielzahl von Plattenhalter (16) entfernbar ist.

9. Telekommunikationskasten (10) nach Anspruch 8, wobei der Körper (12) ein Verriegelungsmerkmal umfasst, um die Platte (18) abnehmbar in der installierten Position zu halten, und wobei das Verriegelungsmerkmal einen flexiblen Finger umfasst, der eine hervorstehende Lasche aufweist und die Platte eine Öffnung umfasst, die konfiguriert ist, um die hervorstehende Lasche aufzunehmen, wenn die Platte in einer installierten Position ist.

10. Telekommunikationskasten nach einem der vorherigen Ansprüche, wobei der Körper eine Öffnung neben angrenzend an die Vielzahl von Plattenhaltern umfasst, wobei die Platte einen Verbinder umfasst, wobei die Öffnung den Verbinder aufnimmt, wenn die Platte in einer installierten Position ist.

11. Telekommunikationsabschluss nach Anspruch 1, wobei die Anschlusspunktkomponente eine elektrisch-optische Signalumwandlungskomponente ist.

12. Telekommunikationskasten nach Anspruch 1, wobei die Platte auch eine Durchgangskomponente beinhaltet.

13. Verfahren zum Bilden eines Telekommunikationskastens, umfassend:
Koppeln eines Rahmens, der eine Vielzahl von Plattenhaltern (16) aufweist, mit einem Innenraum eines Gehäuses; und
abnehmbares Positionieren einer Platte in einem der Vielzahl von Plattenhaltern, wobei die Platte eine Verbindungspunktkomponente und eine erste Kabelspeicherkomponente (34) umfasst;
wobei die erste Kabelspeicherkomponente eine Kabelspeichertrommel ist und die Verbindungspunktkomponente ausgewählt ist aus der Gruppe, umfassend eine elektrisch-optische Wandlerkomponente, eine optisch-elektrische Wandlerkomponente, eine optisch-optische Wandlerkomponente und eine elektrisch-elektrische Wandlerkomponente, wobei ein Positionieren der Platte in einem der Vielzahl von Plattenhaltern ferner ein schwenkbares Montieren der Platte an dem einen der Vielzahl von Plattenhaltern umfasst.

## Revendications

1. Boîtier de télécommunications (10), comprenant :
un corps (12) définissant un espace intérieur (14) ;
une pluralité de supports de panneaux (16) dans l'espace intérieur ; et
un panneau (18) positionné dans l'un de la pluralité de supports de panneau, dans lequel le panneau comprend un composant de point de connexion (24) pour diviser ou convertir un signal ;
dans lequel le panneau comprend un premier composant de stockage de câble (34), dans lequel le premier composant de stockage de câble (34) est un enrouleur de stockage de câble et dans lequel le panneau (18) est monté de manière pivotante sur l'un de la pluralité de supports de panneau (16).

2. Boîtier de télécommunications (10) selon la revendication 1, dans lequel le panneau (18) comprend un second composant de stockage de câble, dans lequel le composant de point de connexion (24) est positionné entre le premier composant de stockage de câble et le second composant de stockage de câble.

3. Boîtier de télécommunications selon la revendication 1, dans lequel la pluralité de supports de panneau (16) comprennent chacun un premier rail de guidage et un second rail de guidage (54), dans lequel le panneau comprend un premier rail (56) et un second rail (58), dans lequel le premier rail de guidage est configuré pour recevoir le premier rail et le second rail de guidage est configuré pour recevoir le second rail, et éventuellement dans lequel le premier rail (56) peut coulisser sur le premier rail de guidage et le second rail (58) peut coulisser sur le second rail de guidage de sorte que le panneau soit mobile entre une position installée et une position désinstallée.

4. Boîtier de télécommunications (10) selon la revendication 1, dans lequel le panneau (18) est positionné de manière amovible dans l'un de la pluralité de supports de panneau (16).

5. Boîtier de télécommunications (10) selon la revendication 1, comprenant en outre un enrouleur de câble d'alimentation (34) positionné dans l'espace intérieur.

6. Boîtier de télécommunications selon la revendication 1, dans lequel le corps comprend en outre une ouverture de câble d'alimentation et une pluralité d'ouvertures de câble de distribution.

7. Boîtier de télécommunications (10) selon l'une quelconque des revendications précédentes, dans lequel les supports de panneau comprennent chacun une charnière.

8. Boîtier de télécommunications (10) selon l'une quelconque des revendications précédentes, dans lequel le panneau (18) est amovible à partir de la charnière de l'un de la pluralité de supports de panneau (16).

9. Boîtier de télécommunications (10) selon la revendication 8, dans lequel le corps (12) comprend un élément de verrouillage pour maintenir de manière amovible le panneau (18) dans la position installée et dans lequel l'élément de verrouillage comprend un doigt flexible ayant une languette en saillie et le panneau comprend une ouverture configurée pour recevoir la languette en saillie lorsque le panneau est en position installée.

10. Boîtier de télécommunications selon l'une quelconque des revendications précédentes, dans lequel le corps comprend une ouverture adjacente à chacun de la pluralité de supports de panneau, dans lequel le panneau comprend un connecteur, dans lequel l'ouverture reçoit le connecteur lorsque le panneau est en position installée.

11. Boîtier de télécommunications selon la revendication 1, dans lequel le composant de point de connexion est un composant de conversion de signal électrique-optique.

12. Boîtier de télécommunications selon la revendication 1, dans lequel le panneau inclut également un composant de passage.

13. Procédé de formation d'un boîtier de télécommunications, comprenant :
l'accouplement d'un cadre ayant une pluralité de supports de panneau (16) à un espace intérieur d'une enceinte ; et
le positionnement de manière amovible d'un panneau dans l'un de la pluralité de supports de panneau, dans lequel le panneau comprend un composant de point de connexion et un premier composant de stockage de câble (34) ;
dans lequel le premier composant de stockage de câble est une bobine de stockage de câble et le composant de point de connexion est choisi dans le groupe comprenant un composant de conversion électrique-optique, un composant de conversion optique-électrique, un composant de conversion optique-optique et un composant de conversion électrique-électrique, dans lequel le positionnement du panneau dans l'un de la pluralité de supports de panneau comprend en outre le montage pivotant du panneau sur l'un de la pluralité de supports de panneau.
